# EUROPEAN PATENT SPECIFICATION

(11) **EP 3 536 814 B1**
(45) Date of publication and mention of the grant of the patent: **23.12.2020**
(21) Application number: 17866924.8
(22) Date of filing: 01.11.2017
(51) Int. Cl.: C21D 8/12, C21D 9/46, C22C 38/00, C22C 38/60, H01F 1/147, C22C 38/02, C22C 38/04, C22C 38/06, B22D 11/00, H01F 1/16

(54) **METHOD FOR PRODUCING GRAIN-ORIENTED ELECTRICAL STEEL SHEET**
VERFAHREN ZUR HERSTELLUNG EINES KORNORIENTIERTEN ELEKTROSTAHLBLECHS
PROCÉDÉ DE FABRICATION D'UNE TÔLE D'ACIER ÉLECTRIQUE À GRAINS ORIENTÉS

(30) Priority: 01.11.2016 JP 2016214613
(43) Date of publication of application: 11.09.2019
(73) Proprietor: JFE Steel Corporation, Tokyo 100-0011 (JP)
(72) Inventor: IMAMURA Takeshi, Tokyo 100-0011 (JP); EHASHI Yuiko, Tokyo 100-0011 (JP); TAKENAKA Masanori, Tokyo 100-0011 (JP); YAMAGUCHI Hiroi, Tokyo 100-0011 (JP)
(74) Representative: Hoffmann Eitle
(86) International application number: PCT/JP2017/039612
(87) International publication number: WO 2018/084198

(56) References cited:
- EP-A1- 2 077 164
- WO-A1-98/08987
- JP-A- H05 105 956
- JP-A- 2000 129 354
- JP-A- 2000 129 354
- JP-A- 2001 303 214
- JP-A- 2001 303 214
- JP-A- 2005 146 295
- JP-A- 2005 146 295
- JP-A- 2008 069 391
- JP-A- 2013 512 332
- US-A1- 2012 018 049

## Description

### TECHNICAL FIELD

The present disclosure relates to a method for producing a grain-oriented electrical steel sheet suitable for an iron core material of a transformer.

### BACKGROUND

For a general technique of producing grain-oriented electrical steel sheets, secondary recrystallization of grains having Goss orientation during a purification annealing by using precipitates called inhibitors is used. Using inhibitors is useful in stably developing secondary recrystallized grains but has required to perform a slab heating at high temperature of 1300 °C or more to once dissolve inhibitor forming components in order to disperse the inhibitors finely into steel. Since the inhibitors cause degradation of magnetic properties after the secondary recrystallization, removing the precipitates and inclusions such as the inhibitors from a steel substrate, by performing the purification annealing at a high temperature of 1100 °C or more and by controlling an atmosphere, has also been required.

Now, on one hand, techniques for reducing thickness of the slab and directly performing a hot rolling have been recently developed for the purpose of cost reduction. However, where the redissolution of the inhibitors by the slab heating at high temperature prior to the hot rolling is required in order to utilize the inhibitors as mentioned above, there is a disadvantage in such method of preparing thin slabs with reduced thickness and directly performing the hot rolling that the slabs are not heated up to a sufficiently high temperature even when the slabs are heated during a conveyance prior to the hot rolling. For such reason, JP 2002-212639 A (PTL 1) proposes a method to utilize inhibitors which contain only a small amount of MnS and MnSe by removing Al as much as possible.

On the other hand, JP 2000-129356 A (PTL 2) proposes a technique for developing Goss-oriented crystal grains by the secondary recrystallization without containing the inhibitor forming components. This is a technique for secondary recrystallizing the grains having Goss orientation without using the inhibitors by eliminating impurities such as the inhibitor forming components as much as possible to reveal dependency of grain boundary energy of crystals at a time of primary recrystallization on misorientation angles at grain boundaries. And an effect thereof is referred to as a texture inhibition effect. In such a method, great advantages are provided both in terms of cost aspect and maintenance aspect because there is no need to perform the purification annealing at high temperature due to unnecessity of the step of purifying the inhibitors as well as because there is no need for the slab heating performed at high temperature, which was essential to fine particle distribution, due to unnecessity of the fine particle distribution of the inhibitors into steel. Moreover, solving the aforementioned problems at the time of slab heating is believed to allow this method to be advantageously applied to the technique for preparing the thin slabs with an aim to cost reduction and directly performing the hot rolling.
WO 98/08987 A1 relates to a process for the production of grain oriented electrical steel strip having high magnetic characteristics, starting from thin slabs. and more precisely relates to a process in which the casting conditions are controlled to obtain such microstructural characteristics in the thin slab.
JP 2001 303 214 A relates to a grain oriented silicon steel sheet using a stock free from inhibitor components, high in magnetic flux density and excellent in core loss particularly in a high frequency area.

### CITATION LIST

### Patent Literature

PTL 1: JP 2002-212639 A
PTL 2: JP 2000-129356 A
PTL 3: WO 98/08987 A1
PTL 4: JP 2001 303 214 A

### SUMMARY

### (Technical Problem)

As mentioned above, the technique for producing the grain-oriented electrical steel sheets without using the inhibitor forming components is expected to be compatible with the production technique using the thin slabs with an aim to cost reduction. However, a problem of degradation in magnetic properties became newly apparent when producing the grain-oriented electrical steel sheets in combination with these production techniques.

It could, therefore, be helpful to provide a way to stably obtain an excellent magnetic property upon producing the grain-oriented electrical steel sheets from the thin slabs without using the inhibitor forming components.

### (Solution to Problem)

We made intensive studies on the way to solve the problems stated above. As a result, we newly discovered that a favorable magnetic property is stably obtainable even for the grain-oriented electrical steel sheets produced from the thin slabs without using the inhibitor forming components, by controlling temperature and time in a heating process prior to a hot rolling. We conducted the following experiment.

### < Experiment >

A thin slab with a thickness of 64 mm was produced by a continuous casting process with using a molten steel containing, in mass%, C: 0.012 %, Si: 3.30 %, Mn: 0.050 %, Al: 0.0027 %, N: 0.0010 %, S: 0.0009 % and Se: 0.0010 %. A slab heating was performed prior to a hot rolling by passing the slab through a tunnel furnace on the way of conveying the slab to the step of hot rolling. The slab was heated with both of the heating temperature and the heating time variously changed in the heating process.

The hot rolling was started in about 35 seconds after completion of the slab heating process. The thin slab was hot rolled to form a hot-rolled steel sheet with a thickness of 2.2 mm. Then the hot-rolled steel sheet was subjected to a hot band annealing at 1000 °C for 30 seconds, followed by a cold rolling finishing into a sheet thickness of 0.27 mm. Then a primary recrystallization annealing, which also serves as a decarburization, was performed under soaking conditions of at 850 °C for 60 seconds in an atmosphere of 50%H₂ + 50%N₂ with a dew point of 50 °C, followed by application of an annealing separator mainly containing MgO, and then performing a purification annealing to retain at 1200 °C for 10 hours in a H₂ atmosphere.

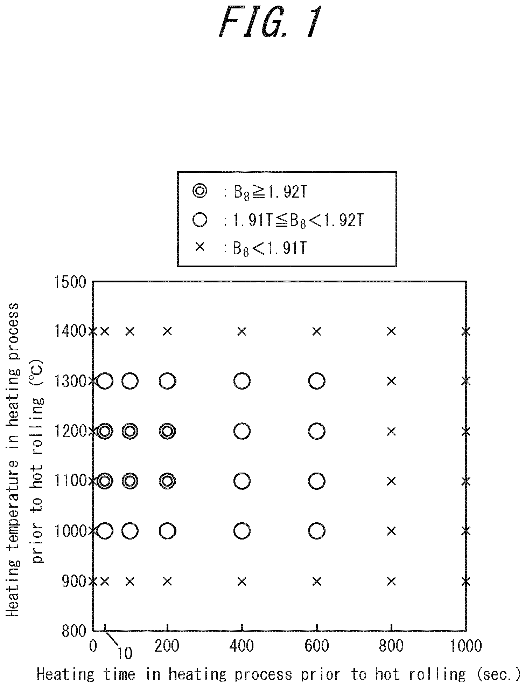

Then a flattening annealing, which also serves as forming a tension imparting coating mainly containing magnesium phosphate and chromic acid, was performed under the condition of at 800 °C for 15 seconds. Magnetic flux density B₈ of the obtained sample was measured according to the method described in JIS C 2550. The result of the obtained magnetic flux density B₈ organized in relation to the heating temperature and the heating time in the heating process prior to the hot rolling is illustrated in FIG. 1. It can be observed from FIG. 1 that the magnetic flux density is increased by controlling the temperature in the heating process to 1000 °C or more and 1300 °C or less, and the time in the heating process to 10 seconds or more and 600 seconds or less.

Although the mechanism that the temperature and the time in the heating process prior to the hot rolling thus affect the magnetic property has not necessarily been clarified, we consider as follows.

Features of the thin slabs include slab structure comprising largely columnar crystals. This is thought to be due to equiaxial crystals being unlikely to be generated from a center part of the sheet thickness as the thin slabs, compared with thick slabs, cool faster when casted and have a larger temperature gradient at interfaces of solidified shells. The slab structure of the columnar crystals, after the hot rolling, is known to generate hot rolling processed structure which is unlikely to recrystallize even in subsequent heat treatments. This structure, which is unlikely to recrystallize, affects the degradation of magnetic property in the grain-oriented electrical steel sheets after a final annealing. That is, it is presumed that the columnar crystals becoming main structure of the slab structure in the state prior to the hot rolling cause the magnetic degradation.

The columnar crystals need to be reduced in order for solving this problem. It is possible to reduce the columnar crystals in general steel products other than the electrical steel sheets as the general steel products involve α-γ transformation so that the recrystallization occurs with the transformation in a temperature range of γ-phase even in the columnar crystals formed in a high temperature range of α-phase. However, the grain-oriented electrical steel sheets may have α single-phase structure in some cases as the grain-oriented electrical steel sheets prevent the γ-transformation after the secondary recrystallization from destroying Goss-oriented grain-size microstructure, resulting in significantly low proportion of the γ-phase. Because of this, it is difficult to reduce the columnar crystals in virtue of the aforementioned recrystallization with transformation in the temperature range of γ-phase.

Therefore we will focus on another feature in the production of thin slabs i.e. strain accumulated within the structure of the thin slabs. Normally the slabs are casted in a vertical direction but then adjusted so that they turn approximately 90 ° with a certain curvature to be conveyed in a horizontal direction. Regular slabs with a slab thickness of about 200 mm are not easily deformed therefore have a small amount of curvature. But the thin slabs with a thin thickness are easy to be bent therefore the production cost can be reduced with a smaller space necessary for bending adjustment by increasing the curvature at the time of the adjustment. At this time, there is a feature that considerable degree of the strain is accumulated within the slab structure.

With this strain accumulated, performing a heat treatment at a high temperature to some extent, specifically, performing a heat treatment to heat at least at a temperature range of 1000 °C or more for 10 seconds or more, is believed highly probably to have led to partial strain-induced grain growth or recrystallization of the structure different from the columnar crystals (equiaxial crystals) to reduce the columnar crystals, resulting in the improvement of the magnetic property of product sheets. This phenomenon is possibly peculiar to the steel samples mainly containing α-phase such as the grain-oriented electrical steel sheets, as the strain, even if once accumulated, is released upon transformation in general steel products involving the α-γ transformation.

In addition, either in a circumstance where the heating temperature is excessively high for example when the heating temperature in the heating process is over 1300 °C or in a circumstance where the heating time is excessively long for example when the heating time is over 600 seconds, it is believed that the magnetic property of the product sheets degraded due to excessively coarse crystal grains generated instead of the columnar crystals and subsequent generation of the hot rolling processed structure being not easily recrystallized even with the heat treatments, similarly to the columnar crystals.

Newly adding and installing an apparatus having function of enhancing equiaxial crystals of the structure to existing production lines may be also considered as a solution to the problems related to the columnar crystals in the thin slabs. But in adding such apparatus there is a disadvantage of considerable increase of the cost. In contrast, the present disclosure is a new technique that can merge well the features of the structure of grain-oriented electrical steel sheets and the features of the continuous casting process with thin slabs, as well as that can minimize cost increase such from the installation of new apparatuses.

Thus, we succeeded in preventing the degradation of the magnetic property by controlling the temperature and the time in the heating process prior to the hot rolling when producing the grain-oriented electrical steel sheets from the thin slabs with using inhibitor-less materials.

The present disclosure is based on the aforementioned new discoveries and the invention is defined in the appended claims.

### (Advantageous Effect)

It is thus possible to stably obtain the excellent magnetic property upon producing the grain-oriented electrical steel sheets from the thin slabs without using the inhibitor forming components.

### BRIEF DESCRIPTION OF THE DRAWINGS

In the accompanying drawings:
FIG. 1 is a graph illustrating a relationship between the heating temperature and the heating time in the heating process and the magnetic flux density Bg.

### DETAILED DESCRIPTION

### [Chemical composition]

A grain-oriented electrical steel sheet and a method for producing thereof according to one of the disclosed embodiments are described below. Firstly, reasons for limiting chemical composition of steel are described. In the description, "%" representing content (amount) of each component element denotes "mass%" unless otherwise noted.

### C: 0.002 % or more and 0.100 % or less

The amount of C is limited to 0.100 % or less. This is because, if the content of C exceeds 0.100 %, it would be difficult to reduce the content to 0.005 % or less where no magnetic aging occurs after a decarburization annealing. Meanwhile, if the content of C is less than 0.002 %, an effect of grain boundary strengthening by C would be lost to cause defects, such as cracks occurred in slabs, that impede operability. Therefore, the amount of C should be 0.002 % or more and 0.100 % or less. The amount of C is preferably 0.010 % or more. And the amount of C is preferably 0.050 % or less.

### Si: 2.00 % or more and 8.00 % or less

Si is an element necessary for increasing specific resistance of steel and improving iron loss properties. For that purpose, the content of Si of 2.00 % or more is required. Meanwhile, if the content of Si exceeds 8.00 %, workability of steel degrades to make the rolling difficult. Therefore, the amount of Si should be 2.00 % or more and 8.00 % or less. The amount of Si is preferably 2.50 % or more. And the amount of Si is preferably 4.50 % or less.

### Mn: 0.005 % or more and 1.000 % or less

Mn is an element necessary for providing favorable hot workability. For that purpose, the content of Mn of 0.005 % or more is required. Meanwhile, if the content of Mn exceeds 1.000 %, magnetic flux density of product sheets decreases. Therefore, the amount of Mn should be 0.005 % or more and 1.000 % or less. The amount of Mn is preferably 0.040 % or more. And the amount of Mn is preferably 0.200 % or less.

As mentioned above, the content of Al, N, S and Se as the inhibitor forming components is to be reduced as much as possible. Specifically, each amount should be limited to Al: less than 0.0100 %, N: less than 0.0050 %, S: less than 0.0050 % and Se: less than 0.0050 %. The amount of Al is preferably less than 0.0080 %. The amount of N is preferably less than 0.0040 %. The amount of S is preferably less than 0.0030 %. And the amount of Se is preferably less than 0.0030 %.

Our basic component is as described above, and the balance is Fe and inevitable impurities. Such inevitable impurities include impurities that inevitably contaminate from raw materials, production lines and so forth. In addition to the above, the following other elements can be also appropriately contained.

For the purpose of improving the magnetic property, the present disclosure can appropriately contain one or more selected from among, Cr in an amount of 0.01 % or more, Cr in an amount of 0.50 % or less, Cu in an amount of 0.01 % or more, Cu in an amount of 0.50 % or less, P in an amount of 0.005 % or more, P in an amount of 0.50 % or less, Ni in an amount of 0.001 % or more, Ni in an amount of 0.50 % or less, Sb in an amount of 0.005 % or more, Sb in an amount of 0.50 % or less, Sn in an amount of 0.005 % or more, Sn in an amount of 0.50 % or less, Bi in an amount of 0.005 % or more, Bi in an amount of 0.50 % or less, Mo in an amount of 0.005 % or more, Mo in an amount of 0.100 % or less, B in an amount of 0.0002 % or more, B in an amount of 0.0025 % or less, Nb in an amount of 0.0010 % or more, Nb in an amount of 0.0100 % or less, V in an amount of 0.0010 % or more and V in an amount of 0.0100 % or less. There is no effect of improving the magnetic property when the addition amount of each chemical composition is less than the lower limit. And the magnetic property degrades due to suppression of development of secondary recrystallized grains when the addition amount of each chemical composition is more than the upper limit.

Secondly, our method for producing a grain-oriented electrical steel sheet will be described.

### [Slab thickness]

A slab is produced through a continuous casting process from a molten steel having the aforementioned chemical composition. Thickness of the produced slab is designed to be 100 mm or less in order for cost reduction. Meanwhile, the thickness of the slab is designed to be 25 mm or more. This is because the thinner the thickness of the slab is, the faster solidification reaches to a center of the slab when cooled, leaving the slab more difficult to be adjusted afterward. The thickness of the slab is preferably 40 mm or more. And the thickness of the slab is preferably 80 mm or less.

### [Heating]

The slab produced from the molten steel is heated in a heating process prior to a hot rolling. As illustrated in the aforementioned experimental result of FIG 1, heating temperature of 1000 °C or more and 1300 °C or less, as well as heating time of 10 seconds or more and 300 seconds or less, are essential as heating conditions.

An annealing at a high temperature for a long time for dissolving inhibitors is not necessary for the aforementioned heating process. Therefore, the heating temperature is preferably 1250 °C or less, and the heating time is 300 seconds or less, both from the viewpoint of cost reduction. Further, the heating temperature is preferably 1110 °C or more, and the heating temperature is preferably 1200 °C or less, both from the viewpoint of the magnetic property. And the heating time is preferably 10 seconds or more, and the heating time is preferably 200 seconds or less, both from the viewpoint of the magnetic property as well. In addition, at least a part of the heating may be performed by an induction heating in the heating process. The induction heating is a method to heat with self-heating, for example, by applying an alternating magnetic field to a slab.

In the heating method, it is preferable to maintain heated during conveyance with using an apparatus, in which a conveyance table and a heating furnace are integrated, called a tunnel furnace. Fluctuation of the temperature within the slab can be suppressed by this method.

Here, in a conventional method of slab heating, it is common that the heating furnace has a skid and the slab is conveyed in a direction of the slab width with the slab being lifted intermittently by a walking beam and so forth during the heating. However, when using the thin slabs, a problem arises that the slab droops due to its thinness upon lifted in the furnace. Moreover, considerable drop in temperature at a skid part directly affects the magnetic degradation at a corresponding part of a product sheet. Therefore, the above method is inappropriate when using the thin slabs. For these reasons, a method of heating while conveying the slab in parallel to a casting direction of the slab, such as a tunnel furnace method, is desirable in the present disclosure. Even in such a case, it is concerned that the drooping of the slab between rolls may occur to cause surface defects and the like as the slab is normally conveyed on the table rolls. For this reason and in order to be able to suppress the drooping of the slab as well as to prevent heat release from the rolls, conveyance rate of 10 m/min. or more is desirable when conveying the slab while heating.

### [Hot rolling]

A hot rolling is performed after the aforementioned heating. Given that the slab is thin, it is desirable to omit a rough rolling and only perform a finish rolling through a tandem mill from the viewpoint of cost. When rolling, it is preferable to start the hot rolling within 100 seconds after the previous heating process has been performed from the viewpoint of suppressing variation in temperature. More preferably, the hot rolling is started at an elapsed time of more than 30 seconds. And more preferably, the hot rolling is started within an elapsed time of 70 seconds or less.

As temperature of the hot rolling, a start temperature of 900 °C or more as well as a finish temperature of 700 °C or more are desirable, both for obtaining favorable final magnetic property in the inhibitor-less chemical component. However, the finish temperature is desirably 1000 °C or less as a shape after the rolling tends to be unfavorable when the finish temperature is too high.

### [Hot band annealing]

A hot band annealing is performed as needed to a hot-rolled steel sheet obtained through the hot rolling. In order to obtain favorable magnetic property, temperature of the hot band annealing is preferably 800 °C or more, and the temperature of the hot band annealing is preferably 1150 °C or less. When the temperature of the hot band annealing is less than 800 °C, band texture from the hot rolling remains to make it difficult to achieve a primary recrystallized microstructure with uniformly-sized grains, resulting in impeding development of a secondary recrystallization. When the temperature of the hot band annealing exceeds 1150 °C, grain size after the hot band annealing grows too coarse to make it extremely disadvantageous for achieving the primary recrystallized microstructure with uniformly-sized grains. The temperature of the hot band annealing is desirably 950 °C or more. And the temperature of the hot band annealing is desirably 1080 °C or less. Annealing time is preferably 10 seconds or more. And the annealing time is preferably 200 seconds or less. The band texture tends to remain when the annealing time is less than 10 seconds. When the annealing time exceeds 200 seconds, a concern arises that segregate-able elements and so forth segregate to grain boundaries so that defects such as cracks and the like may occur easily during a subsequent cold rolling.

### [Cold rolling]

After the hot rolling or the hot band annealing, a cold rolling is performed once or more with an intermediate annealing(s) in between, as needed, to form a cold-rolled steel sheet having a final sheet thickness. Temperature of the intermediate annealing is preferably 900 °C or more. And the temperature of the intermediate annealing is preferably 1200 °C or less. When the temperature of the intermediate annealing is less than 900 °C, the recrystallized grains become finer and the primary recrystallized microstructure has less Goss nuclei, resulting in the magnetic degradation. Meanwhile, when the temperature of the intermediate annealing exceeds 1200 °C, the grain size grows too coarse to make it extremely disadvantageous for achieving the primary recrystallized microstructure with uniformly-sized grains, as with the hot band annealing.

Further, the temperature of the intermediate annealing is more preferably in an approximate range from 900 °C to 1150 °C. In a final cold rolling, performing the cold rolling with an increased temperature to 100 °C to 300 °C is effective, and performing an aging treatment once or more within a temperature range from 100 °C to 300 °C during the cold rolling is also effective, both in order for improving the magnetic property by changing recrystallized texture.

### [Primary recrystallization annealing]

A primary recrystallization annealing is performed after the aforementioned cold rolling. The primary recrystallization annealing may also serve as a decarburization annealing. An annealing temperature of 800 °C or more is effective, and the annealing temperature of 900 °C or less is also effective, both from the viewpoint of decarburization. An atmosphere is desirably wet from the viewpoint of decarburization. Moreover, annealing time is preferably in an approximate range from 30 seconds to 300 seconds. However, these will not apply to a case with C contained only in an amount of 0.005 % or less where the decarburization is unnecessary.

### [Applying annealing separator]

An annealing separator is applied, as needed, to a steel sheet after the aforementioned primary recrystallization annealing. At this point, in a case of forming a forsterite film as making much account of iron loss, the forsterite film is formed while a secondary recrystallized microstructure is developed by applying the annealing separator mainly containing MgO followed by performing a secondary recrystallization annealing which also serves as a purification annealing. In a case of not forming the forsterite film as making much account of blanking workability, the annealing separator will not be applied, or even if applied, silica, alumina and so forth are used instead of MgO as MgO forms the forsterite film. When applying these annealing separators, an electrostatic coating and the like which does not introduce water is effective. Heat resistant inorganic material sheets, for example, silica, alumina and mica, may also be used.

### [Secondary recrystallization annealing]

A secondary recrystallization annealing is performed after the aforementioned primary recrystallization annealing or applying the annealing separator. The secondary recrystallization annealing may also serve as a purification annealing. The secondary recrystallization annealing, serving as the purification annealing as well, is desirably performed at a temperature of 800 °C or more in order to generate a secondary recrystallization. Further, it is desirable to retain the temperature at 800 °C or more for 20 hours or more in order to complete the secondary recrystallization. On one hand, in the aforementioned case of not forming the forsterite film as making much account of the blanking property, it is also possible to finish the annealing with the retention of the temperature in a range from 850 °C to 950 °C since only the secondary recrystallization has to be completed. On the other hand, in the aforementioned case of forming the forsterite film as making much account of the iron loss or in order to reduce noise from a transformer, it is desirable to heat up to a temperature of about 1200 °C.

### [Flattening annealing]

A flattening annealing may further be performed after the aforementioned secondary recrystallization annealing. At such point, adhered annealing separator will be removed by water washing, brushing and/or acid cleaning in a circumstance where the annealing separator was applied. It is effective to subsequently adjust shape by performing the flattening annealing in order to reduce iron loss. Preferable temperature of the flattening annealing is in an approximate range from 700 °C to 900 °C from the viewpoint of shape adjustment.

### [Insulation coating]

In a circumstance where stacked steel sheets are used, applying an insulation coating on the surface of steel sheets before or after the flattening annealing is effective in order to improve iron loss properties. Coatings that can impart tension to the steel sheets are desirable for reducing the iron loss. It is preferable to adopt coating methods such as a tension coating via a binder, as well as a physical vapor deposition and a chemical vapor deposition to deposit inorganic substances onto the surface layer of steel sheets. This is because these methods are excellent in a coating adhesion property and allow to obtain an effect of considerable reduction of the iron loss.

### [Magnetic domain refining treatment]

A magnetic domain refining treatment can be performed after the aforementioned flattening annealing in order to reduce iron loss. The treatment methods include, for example, methods that are commonly practiced such as grooving a steel sheet after final annealing; introducing a linear thermal strain or impact strain by laser or electron beam; and grooving beforehand an intermediate product such as a cold-rolled sheet with a final sheet thickness.

The other production conditions may be according to those for general grain-oriented electrical steel sheets.

### EXAMPLES

### (Example 1)

A slab having a thickness of 60 mm was produced by continuous casting from a molten steel containing, in mass%, C: 0.015 %, Si: 3.25 %, Mn: 0.040 %, Al: 0.0020 %, N: 0.0009 % and S: 0.0012 %, with the balance being Fe and inevitable impurities. As a heating process prior to a hot rolling, a heating treatment was performed in a tunnel furnace of regenerative burner heating type under the conditions described in Table 1. After 45 seconds of this, a hot rolling was performed to finish to a thickness of 2.2 mm. A hot band annealing was then performed at a temperature of 975 °C for 30 seconds, followed by a cold rolling to finish to a sheet thickness of 0.23 mm.

After this, a primary recrystallization annealing, which also serves as a decarburization annealing, was performed under soaking conditions of at 840 °C for 60 seconds in an atmosphere of 50%H₂ + 50%N₂ with a dew point of 55 °C, followed by applying an annealing separator mainly containing MgO. Then a secondary recrystallization annealing, which also serves as a purification annealing, was performed with retaining a temperature at 1200 °C for 10 hours in a H₂ atmosphere. After this, a flattening annealing, which also serves as formation of a tension imparting coating mainly containing magnesium phosphate and chromic acid, was performed under conditions of at 820 °C for 15 seconds. Magnetic flux density B₈ of thus obtained sample was measured according to a method described in JIS C 2550 and the result thereof is also described in Table 1. As is apparent from Table 1, the steel sheets obtained according to the present disclosure have favorable magnetic properties. Examples 9, 15 and 21 of table 1 are not in accordance with the invention in view of the heating time of 600 seconds.

### [Table 1]

**Table 1**

| No. | Heating process prior to hot rolling | | Magnetic flux density B₈ | Remarks |
|---|---|---|---|---|
| | Heating temperature | Heating time | | |
| | (°C) | (sec.) | (T) | |
| 1 | 900 | 10 | 1.558 | Comparative example |
| 2 | 900 | 300 | 1.585 | Comparative example |
| 3 | 950 | 10 | 1.794 | Comparative example |
| 4 | 950 | 300 | 1.807 | Comparative example |
| 5 | 1000 | 2 | 1.902 | Comparative example |
| 6 | 1000 | 10 | 1.929 | Example |
| 7 | 1000 | 100 | 1.928 | Example |
| 8 | 1000 | 300 | 1.917 | Example |
| 9 | 1000 | 600 | 1.910 | Example |
| 10 | 1000 | 1000 | 1.898 | Comparative example |
| 11 | 1150 | 2 | 1.900 | Comparative example |
| 12 | 1150 | 10 | 1.932 | Example |
| 13 | 1150 | 100 | 1.933 | Example |
| 14 | 1150 | 300 | 1.919 | Example |
| 15 | 1150 | 600 | 1.915 | Example |
| 16 | 1150 | 1000 | 1.899 | Comparative example |
| 17 | 1300 | 2 | 1.894 | Comparative example |
| 18 | 1300 | 10 | 1.917 | Example |
| 19 | 1300 | 100 | 1.917 | Example |
| 20 | 1300 | 300 | 1.916 | Example |
| 21 | 1300 | 600 | 1.912 | Example |
| 22 | 1300 | 1000 | 1.888 | Comparative example |
| 23 | 1350 | 10 | 1.577 | Comparative example |
| 24 | 1350 | 300 | 1.567 | Comparative example |

### (Example 2)

A slab having a thickness of 45 mm was produced by continuous casting from a molten steel containing the chemical composition described in Table 2 with the balance being Fe and inevitable impurities. As a heating process prior to a hot rolling, the slab was passed through a tunnel furnace in which a temperature is retained at 1200 °C, and the temperature was continuously retained at 1200 °C for 150 seconds. After 65 seconds from this, a hot rolling was performed to finish to a thickness of 3.0 mm. A slab conveyance rate during the heating process in the tunnel furnace was set to 25 m/min. Moreover, heating up to a temperature of 700 °C was performed by an induction heating, while the further heating and heat retention was performed by a gas burner. A hot band annealing was then performed at a temperature of 1000 °C for 60 seconds, followed by a cold rolling to a sheet thickness of 0.9 mm. In addition, an intermediate annealing was performed at a temperature of 1000 °C for 100 seconds, followed by a cold rolling to finish to a thickness of 0.23 mm.

After this, a primary recrystallization annealing, which also serves as a decarburization annealing, was performed under soaking conditions of at 820 °C for 20 seconds in an atmosphere of 50%H₂ + 50%N₂ with a dew point of 55 °C, followed by applying an annealing separator mainly containing MgO. Then a secondary recrystallization annealing, which also serves as a purification annealing, was performed with retaining a temperature at 1150 °C for 3 hours in a H₂ atmosphere. After this, a flattening annealing, which also serves as formation of a tension imparting coating mainly containing magnesium phosphate and chromic acid, was performed under conditions of at 850 °C for 10 seconds. Magnetic flux density B₈ of thus obtained sample was measured according to a method described in JIS C 2550 and the result thereof is also described in Table 2. As is apparent from Table 2, the steel sheets obtained according to the present disclosure have favorable magnetic properties.

### [Table 2]

**Table 2**

| No. | Chemical composition (mass%) | | | | | | | | Magnetic flux density B₈ (T) | Remarks |
|---|---|---|---|---|---|---|---|---|---|---|
| | C | Si | Mn | sol. Al | N | S | Se | Others | | |
| 1 | 0.011 | 3.41 | 0.050 | 0.0012 | 0.0008 | 0.0010 | 0.0010 | - | 1.915 | Example |
| 2 | 0.095 | 4.56 | 0.840 | 0.0089 | 0.0045 | 0.0028 | - | - | 1.912 | Example |
| 3 | 0.001 | 3.25 | 0.060 | 0.0020 | 0.0013 | 0.0008 | 0.0030 | - | 1.565 | Comparative example |
| 4 | 0.124 | 3.31 | 0.060 | 0.0018 | 0.0010 | 0.0010 | - | - | 1.591 | Comparative example |
| 5 | 0.020 | 1.56 | 0.770 | 0.0021 | 0.0011 | 0.0012 | - | - | 1.584 | Comparative example |
| 6 | 0.013 | 10.50 | 0.050 | 0.0010 | 0.0010 | 0.0011 | - | - | 1.580 | Comparative example |
| 7 | 0.055 | 3.39 | 0.004 | 0.0020 | 0.0015 | 0.0007 | 0.0010 | - | 1.599 | Comparative example |
| 8 | 0.074 | 3.24 | 1.040 | 0.0046 | 0.0009 | 0.0021 | - | - | 1.602 | Comparative example |
| 9 | 0.026 | 2.58 | 0.190 | 0.0130 | 0.0011 | 0.0012 | - | - | 1.783 | Comparative example |
| 10 | 0.015 | 3.86 | 0.140 | 0.0019 | 0.0094 | 0.0012 | 0.0020 | - | 1.845 | Comparative example |
| 11 | 0.018 | 3.15 | 0.040 | 0.0016 | 0.0010 | 0.0120 | - | - | 1.867 | Comparative example |
| 12 | 0.020 | 3.02 | 0.050 | 0.0020 | 0.0008 | 0.0015 | 0.0100 | - | 1.564 | Comparative example |
| 13 | 0.015 | 3.25 | 0.050 | 0.0019 | 0.0012 | 0.0015 | 0.0010 | Sb:0.18, P:0.013 | 1.934 | Example |
| 14 | 0.021 | 3.46 | 0.130 | 0.0055 | 0.0009 | 0.0035 | - | Cr:0.02, Cu:0.02, Sb:0.008, Sn:0.015 | 1.920 | Example |
| 15 | 0.048 | 5.51 | 0.360 | 0.0019 | 0.0014 | 0.0013 | 0.0020 | Ni:0.42, Sn:0.38, Mo:0.009 | 1.921 | Example |
| 16 | 0.008 | 3.59 | 0.210 | 0.0017 | 0.0042 | 0.0007 | - | Nb:0.0015, V:0.0015, Cr:0.43, Ni:0.02 | 1.918 | Example |
| 17 | 0.014 | 3.20 | 0.230 | 0.0064 | 0.0010 | 0.0048 | 0.0050 | Cu:0.45, Bi:0.008, Mo:0.075 | 1.920 | Example |
| 18 | 0.033 | 2.88 | 0.040 | 0.0011 | 0.0008 | 0.0008 | - | P:0.31, Sb:0.43, B:0.0005, V:0.0070 | 1.925 | Example |
| 19 | 0.015 | 3.04 | 0.070 | 0.0022 | 0.0028 | 0.0015 | - | Bi:0.33, B:0.0022, Nb:0.0094 | 1.925 | Example |
| 20 | 0.002 | 3.31 | 0.04 | 0.0028 | 0.0016 | 0.0014 | - | - | 1.917 | Example |
| 21 | 0.014 | 3.11 | 0.97 | 0.0048 | 0.0010 | 0.0007 | 0.0010 | - | 1.910 | Example |
| 22 | 0.021 | 3.48 | 0.2 | 0.0018 | 0.0015 | 0.0012 | 0.0070 | - | 1.877 | Comparative example |
| 23 | 0.035 | 2.46 | 0.09 | 0.0017 | 0.0064 | 0.0012 | - | - | 1.872 | Comparative example |

### INDUSTRIAL APPLICABILITY

The present disclosure does not only allow to stably obtain excellent magnetic properties in grain-oriented electrical steel sheets produced from thin slabs without using inhibitor forming components, but is also applicable to stainless steels having α single-phase structure same as that of the grain-oriented electrical steel sheets.

## Claims

1. A method for producing a grain-oriented electrical steel sheet, comprising:
subjecting a molten steel to continuous casting to form a slab with a thickness of 25 mm or more and 100 mm or less, the molten steel having a chemical composition containing, in mass%,
C in an amount of 0.002 % or more and 0.100 % or less,
Si in an amount of 2.00 % or more and 8.00 % or less,
Mn in an amount of 0.005 % or more and 1.000 % or less,
Al in an amount of less than 0.0100 %, N in an amount of less than 0.0050 %, S in an amount of less than 0.0050 % and Se in an amount of less than 0.0050 %,
optionally, in mass%, one or more selected from the group of
Cr in an amount of 0.01 % or more and 0.50 % or less,
Cu in an amount of 0.01 % or more and 0.50 % or less,
P in an amount of 0.005 % or more and 0.50 % or less,
Ni in an amount of 0.001 % or more and 0.50 % or less,
Sb in an amount of 0.005 % or more and 0.50 % or less,
Sn in an amount of 0.005 % or more and 0.50 % or less,
Bi in an amount of 0.005 % or more and 0.50 % or less,
Mo in an amount of 0.005 % or more and 0.100 % or less,
B in an amount of 0.0002 % or more and 0.0025 % or less,
Nb in an amount of 0.0010 % or more and 0.0100 % or less and
V in an amount of 0.0010 % or more and 0.0100 % or less with the balance being Fe and inevitable impurities;
heating and then hot rolling the slab to form a hot-rolled steel sheet;
cold rolling the hot-rolled steel sheet once or cold rolling the hot-rolled steel sheet twice or more with an intermediate annealing in between, to form a cold-rolled steel sheet having a final sheet thickness;
performing a primary recrystallization annealing to the cold-rolled steel sheet;
performing a secondary recrystallization annealing to the cold-rolled steel sheet after the primary recrystallization annealing;
wherein the step of heating the slab is performed at a temperature of 1000 °C or more and 1300 °C or less for a time of 10 seconds or more and 300 seconds or less.

2. The method for producing a grain-oriented electrical steel sheet according to claim 1,
wherein the slab is heated with being conveyed along a casting direction at a rate of 10 m/min. or more in the step of heating the slab.

3. The method for producing a grain-oriented electrical steel sheet according to claim 1 or 2,
wherein the chemical composition contains, in mass%, S in an amount of less than 0.0030 % and Se in an amount of less than 0.0030 %.

4. The method for producing a grain-oriented electrical steel sheet according to any one of claims 1 to 3,
wherein the chemical composition contains, in mass%, one or more selected from the group consisting of
Cr in an amount of 0.01 % or more and 0.50 % or less,
Cu in an amount of 0.01 % or more and 0.50 % or less,
P in an amount of 0.005 % or more and 0.50 % or less,
Ni in an amount of 0.001 % or more and 0.50 % or less,
Sb in an amount of 0.005 % or more and 0.50 % or less,
Sn in an amount of 0.005 % or more and 0.50 % or less,
Bi in an amount of 0.005 % or more and 0.50 % or less,
Mo in an amount of 0.005 % or more and 0.100 % or less,
B in an amount of 0.0002 % or more and 0.0025 % or less,
Nb in an amount of 0.0010 % or more and 0.0100 % or less and
V in an amount of 0.0010 % or more and 0.0100 % or less.

5. The method for producing a grain-oriented electrical steel sheet according to any one of claims 1 to 4,
wherein at least a part of the heating is performed by an induction heating in the step of heating the slab.

## Patentansprüche

1. Verfahren zur Herstellung eines kornorientierten Elektrostahlblechs, umfassend:
das Stranggießen einer Stahlschmelze, so dass eine Bramme mit einer Dicke von 25 mm oder mehr und 100 mm oder weniger gebildet wird, wobei die Stahlschmelze eine chemische Zusammensetzung aufweist, in Massen-%, enthaltend
C in einer Menge von 0,002 % oder mehr und 0,100 % oder weniger,
Si in einer Menge von 2,00 % oder mehr und 8,00 % oder weniger,
Mn in einer Menge von 0,005 % oder mehr und 1,000 % oder weniger,
Al in einer Menge von weniger als 0,0100 %, N in einer Menge von weniger als 0,0050 %, S in einer Menge von weniger als 0,0050 % und Se in einer Menge von weniger als 0,0050 %,
gegebenenfalls, in Massen-%, eines oder mehrere, ausgewählt aus der Gruppe aus
Cr in einer Menge von 0,01 % oder mehr und 0,50 % oder weniger,
Cu in einer Menge von 0,01 % oder mehr und 0,50 % oder weniger,
P in einer Menge von 0,005 % oder mehr und 0,50 % oder weniger,
Ni in einer Menge von 0,001 % oder mehr und 0,50 % oder weniger,
Sb in einer Menge von 0,005 % oder mehr und 0,50 % oder weniger,
Sn in einer Menge von 0,005 % oder mehr und 0,50 % oder weniger,
Bi in einer Menge von 0,005 % oder mehr und 0,50 % oder weniger,
Mo in einer Menge von 0,005 % oder mehr und 0,100 % oder weniger,
B in einer Menge von 0,0002 % oder mehr und 0,0025 % oder weniger,
Nb in einer Menge von 0,0010 % oder mehr und 0,0100 % oder weniger und
V in einer Menge von 0,0010 % oder mehr und 0,0100 % oder weniger, wobei der Rest Fe und unvermeidbare Verunreinigungen sind;
das Erwärmen und anschließend das Warmwalzen der Bramme, so dass ein warmgewalztes Stahlblech gebildet wird;
das einmalige Kaltwalzen des warmgewalzten Stahlblechs oder das zwei- oder mehrmalige Kaltwalzen des warmgewalzten Stahlblechs mit einem Zwischenglühen dazwischen, so dass ein kaltgewalztes Stahlblech mit einer Endblechdicke gebildet wird;
das primäre Rekristallisationsglühen des kaltgewalzten Stahlblechs;
das sekundäre Rekristallisationsglühen des kaltgewalzten Stahlblechs nach dem primären Rekristallisationsglühen;
worin der Schritt des Erwärmens der Bramme bei einer Temperatur von 1000 °C oder mehr und 1300 °C oder weniger für eine Zeit von 10 Sekunden oder mehr und 300 Sekunden oder weniger durchgeführt wird.

2. Verfahren zur Herstellung eines kornorientieren Elektrostahlblechs gemäß Anspruch 1,
worin die Bramme erwärmt wird, indem sie im Schritt des Erwärmens der Bramme entlang einer Gießrichtung mit einer Geschwindigkeit von 10 m/min oder mehr befördert wird.

3. Verfahren zur Herstellung eines kornorientieren Elektrostahlblechs gemäß Anspruch 1 oder 2,
worin die chemische Zusammensetzung, in Massen-%, S in einer Menge von weniger als 0,0030 % und Se in einer Menge von weniger als 0,0030 % enthält.

4. Verfahren zur Herstellung eines kornorientieren Elektrostahlblechs gemäß mindestens einem der Ansprüche 1 bis 3,
worin die chemische Zusammensetzung, in Massen-%, eines oder mehrere enthält, ausgewählt aus der Gruppe, bestehend aus
Cr in einer Menge von 0,01 % oder mehr und 0,50 % oder weniger,
Cu in einer Menge von 0,01 % oder mehr und 0,50 % oder weniger,
P in einer Menge von 0,005 % oder mehr und 0,50 % oder weniger,
Ni in einer Menge von 0,001 % oder mehr und 0,50 % oder weniger,
Sb in einer Menge von 0,005 % oder mehr und 0,50 % oder weniger,
Sn in einer Menge von 0,005 % oder mehr und 0,50 % oder weniger,
Bi in einer Menge von 0,005 % oder mehr und 0,50 % oder weniger,
Mo in einer Menge von 0,005 % oder mehr und 0,100 % oder weniger,
B in einer Menge von 0,0002 % oder mehr und 0,0025 % oder weniger,
Nb in einer Menge von 0,0010 % oder mehr und 0,0100 % oder weniger und
V in einer Menge von 0,0010 % oder mehr und 0,0100 % oder weniger.

5. Verfahren zur Herstellung eines kornorientieren Elektrostahlblechs gemäß mindestens einem der Ansprüche 1 bis 4,
worin mindestens ein Teil des Erwärmens im Schritt des Erwärmens der Bramme durch Induktionserwärmen durchgeführt wird.

## Revendications

1. Procédé de production d'une tôle d'acier électrique à grains orientés, comprenant :
une soumission d'un acier fondu à une coulée continue pour former une brame d'une épaisseur de 25 mm ou plus et de 100 mm ou moins, l'acier fondu présentant une composition chimique contenant, en % en masse,
C en une quantité de 0,002 % ou plus et de 0,100 % ou moins,
Si en une quantité de 2,00 % ou plus et de 8,00 % ou moins,
Mn en une quantité de 0,005 % ou plus et de 1,000 % ou moins,
Al en une quantité inférieure à 0,0100 %, N en une quantité inférieure à 0,0050 %, S en une quantité inférieure à 0,0050 % et Se en une quantité inférieure à 0,0050 %,
facultativement, en % en masse, un ou plusieurs sélectionnés dans le groupe consistant en
Cr en une quantité de 0,01 % ou plus et de 0,50 % ou moins,
Cu en une quantité de 0,01 % ou plus et de 0,50 % ou moins,
P en une quantité de 0,005 % ou plus et de 0,50 % ou moins,
Ni en une quantité de 0,001 % ou plus et de 0,50 % ou moins,
Sb en une quantité de 0,005 % ou plus et de 0,50 % ou moins,
Sn en une quantité de 0,005 % ou plus et de 0,50 % ou moins,
Bi en une quantité de 0,005 % ou plus et de 0,50 % ou moins,
Mo en une quantité de 0,005 % ou plus et de 0,100 % ou moins,
B en une quantité de 0,0002 % ou plus et de 0,0025 % ou moins,
Nb en une quantité de 0,0010 % ou plus et de 0,0100 % ou moins et
V en une quantité de 0,0010 % ou plus et de 0,0100 % ou moins le reste étant Fe et des impuretés inévitables ;
un chauffage et ensuite un laminage à chaud de la brame pour former une tôle d'acier laminée à chaud ;
un laminage à froid de la tôle d'acier laminée à chaud une fois ou un laminage à froid de la tôle d'acier laminée à chaud deux fois ou plus avec un recuit intermédiaire entre les deux, pour former une tôle d'acier laminée à froid présentant une épaisseur finale de tôle ;
une mise en œuvre d'un recuit de recristallisation primaire sur la tôle d'acier laminée à froid ;
une mise en œuvre d'un recuit de recristallisation secondaire sur la tôle d'acier laminée à froid après le recuit de recristallisation primaire ;
dans lequel l'étape de chauffage de la brame est effectuée à une température de 1000 °C ou plus et de 1300 °C ou moins pendant une durée de 10 secondes ou plus et de 300 secondes ou moins.

2. Procédé de production d'une tôle d'acier électrique à grains orientés selon la revendication 1,
dans lequel la brame est chauffée tout en étant transportée le long d'une direction de coulée à une vitesse de 10 m/min ou plus dans l'étape de chauffage de la brame.

3. Procédé de production d'une tôle d'acier électrique à grains orientés selon la revendication 1 ou 2,
dans lequel la composition chimique contient, en % en masse, S en une quantité inférieure à 0,0030 % et Se en une quantité inférieure à 0,0030 %.

4. Procédé de production d'une tôle d'acier électrique à grains orientés selon l'une quelconque des revendications 1 à 3,
dans lequel la composition chimique contient, en % en masse, un ou plusieurs sélectionnés dans le groupe consistant en
Cr en une quantité de 0,01 % ou plus et de 0,50 % ou moins,
Cu en une quantité de 0,01 % ou plus et de 0,50 % ou moins,
P en une quantité de 0,005 % ou plus et de 0,50 % ou moins,
Ni en une quantité de 0,001 % ou plus et de 0,50 % ou moins,
Sb en une quantité de 0,005 % ou plus et de 0,50 % ou moins,
Sn en une quantité de 0,005 % ou plus et de 0,50 % ou moins,
Bi en une quantité de 0,005 % ou plus et de 0,50 % ou moins,
Mo en une quantité de 0,005 % ou plus et de 0,100 % ou moins,
B en une quantité de 0,0002 % ou plus et de 0,0025 % ou moins,
Nb en une quantité de 0,0010 % ou plus et de 0,0100 % ou moins et
V en une quantité de 0,0010 % ou plus et de 0,0100 % ou moins.

5. Procédé de production d'une tôle d'acier électrique à grains orientés selon l'une quelconque des revendications 1 à 4,
dans lequel au moins une partie du chauffage est effectuée par un chauffage par induction dans l'étape de chauffage de la brame.
